# EUROPÄISCHE PATENTSCHRIFT

(11) **EP 1 647 722 B1**
(45) Veröffentlichungstag und Bekanntmachung des Hinweises auf die Patenterteilung: **05.12.2007**
(21) Anmeldenummer: 05019508.0
(22) Anmeldetag: 08.09.2005
(51) Int. Cl.: F15B 15/26, B62D 55/30

(54) **Verfahrabsicherung für einen Hydraulikzylinder**
Cylinder locking mechanism
Mécanisme de verrouillage pour cylindre

(30) Priorität: 13.10.2004 DE 102004049854
(43) Veröffentlichungstag der Anmeldung: 19.04.2006
(73) Patentinhaber: Rheinmetall Landsysteme GmbH, 24107 Kiel (DE)
(72) Erfinder: Wintjen, Jan, 24229 Schwedeneck (DE)
(74) Vertreter: Dietrich, Barbara

(56) Entgegenhaltungen:
- DE-A1- 3 232 322
- DE-U1- 8 803 529
- US-A- 3 813 065
- US-A- 4 893 883
- US-A1- 2004 182 235

## Beschreibung

Die Erfindung betrifft eine Verfahrabsicherung für einen Hydraulikzylinder beispielsweise einer hydraulischen Raupen- bzw. Kettenspannvorrichtung.

Insbesondere zum Ablagen / Aufnehmen einer Brücke bzw. eines Brückensegments ist es notwendig, die Raupenkettenspannung hydraulisch anzupassen, damit die Funktionalität des Systems Laufwerk sichergestellt wird.

Bekannt sind Verfahrsicherungen der Firma Hähnchen, welche unter dem Namen Ratio-Clamp ® vertrieben werden. Diese dienen zur Sicherheit von Mensch und Maschine bei einem Energieausfall oder einer Störung. Hierbei handelt es sich um kraftschlüssige Absicherungen, die über eine Konusverspannung realisiert werden.

Die US 3,813,065 A beschreibt eine Verriegelungsvorrichtung zum gegenseitigen Verriegeln koaxial angeordneter Bauteile, die von einem belasteten Zustand auf einen nicht belasteten Zustand umgekehrt schnell umschaltbar ist. Die Einrichtung ist wahlweise durch ein Fluid, mechanisch und/oder durch elektrische Steuermittel betätigbar. Falls erforderlich, können die beiden Bauteile zwischen zwei Endstellungen des gesamten Verschiebeweges verriegelt werden. Die Verriegelung und Entriegelung wird mit einem geschlossenen Ring erreicht, dessen Durchmesser schnell veränderbar ist, so dass der Ring in eine speziell ausgebildete, zuge-ordnete Nut einrasten und aus dieser wieder herausgezogen werden kann. Durch eine schnelle Bewegung eines Steuerorgans wird der Abstand zwischen den Enden des Ringes ver-größert oder Verkleinert, so dass der zwischen den Ringenden verbleibende Raum verändert wird.

Aus der US 2004/0162235 A1 ist eine weitere Verriegelungseinrichtung bekannt, bei der die Einrichtung bildenden Teile unterschiedliche Härten haben.

Eine hydraulische Kettenspanneinrichtung für Gleiskettenfahrzeuge ist der DE 32 32 322 A1 entnehmbar. Die Kolben-Zylindereinheit weist hierbei Einrichtungen zur mechanischen Abstützung des hydraulisch einstellbaren Kolbenhubs auf.

Insbesondere für die Verfahrabsicherung bei den Raupenspannvorrichtungen verwendeten Hydraulikzylindern sind diese kraftschlüssigen Absicherungen nicht ausreichend, um die zu erwartenden Kräfte aufnehmen zu können.

Die Erfindung stellt sich die Aufgabe, eine Verfahrabsicherung aufzuzeigen, die hohe Kräfte in einfacher Art und Weise aufnehmen kann.

Gelöst wird die Aufgabe durch die Merkmale des Patentanspruchs 1.

Der Erfindung liegt die ldee zugrunde, das Verfahren des Hydraulikzylinders mittels verstellbaren Mitteln, beispielsweise mehreren Sperrklinken, im Zylinder selbst zu blockieren. Es ist vorgesehen, das Verstellen der Zylinderstange zu verhindern. Dazu besitzt die im Hydraulikzylinder befindliche Zylinderstange einen weiteren Kolben. Dieser dient zur Aufnahme der Mittel, die ringförmig am / im Kolben eingebunden sind. Als ausreichend hat sich in der Praxis eine Ringanordnung der Mittel gezeigt. Es können aber auch mehrere umfangsseitig zwei oder mehrere Ringe bildende Mittel vorgesehen werden.

Als gleichfalls vorteilhaft hat sich gezeigt, dass eine gleichmäßige Verteilung des / der Mittel im Ring zu bevorzugen ist. Diese Mittel greifen in im Zylinder mit definierten Anständen vorzugsweise eingedrehte ringförmige Nute, um bei einem Systemausfall (z.B. Druckabfall) ein Verfahren des Hydraulikzylinders zu verhindern. Diese einfache doch sehr effektive Lösung gewährleistet einen sicheren Schutz für Mensch und Maschine

Vorteilhafte Ausführungen sind in weiteren Unteransprüchen aufgeführt.

Damit ist die Lösung resistent gegen Erschütterungen, ermöglicht eine formschlüssige Sicherung sowie die Aufnahme größerer Kräfte bei einer kompakten Bauweise.

Der Einsatz beschränkt sich nicht nur auf Kettenspannvorrichtungen. Weitere Einsatzmöglichkeiten sind Fahrstühle, Metalldruckgussmaschinen, Werkzeugmaschinen, Pressen etc., d.h., bei mit Hydraulikzylindern betriebenen Systemen, bei denen bei einem Energieausfall (beabsichtigt oder unbeabsichtigt), einer Funktionsstörung oder durch andere auch äußere Einflüsse die Sicherheit von Mensch und Maschine bzw. die Funktionalität gewährleistet werden muss.

Anhand eines Ausführungsbeispiels mit Zeichnung soll die Erfindung näher erläutert werden. Es zeigt:
- Fig. 1: einen Hydraulikzylinder im Viertelschnitt mit eingefahrenen Mitteln,
- Fig. 2: die Kolbenstange aus Fig. 1 in isometrischer Darstellung,
- Fig. 2a: die Schnittansicht B-B aus Fig. 2,
- Fig.3: der Hydraulikzylinder aus Fig. 1 im Viertelschnitt mit ausgefahrenen Mitteln,
- Fig. 3a: eine vergrößerte Darstellung aus Fig. 3,
- Fig. 4: die Kolbenstange aus Fig. 3 in isometrischer Darstellung,
- Fig. 4a: die Schnittansicht C-C aus Fig. 4,
- Fig. 5: in einer Prinzipdarstellung einen Systemaufbau eines Laufwerks als ein Anwendungsbeispiel,
- Fig. 5a: eine vergrößerte Darstellung aus Fig. 5.

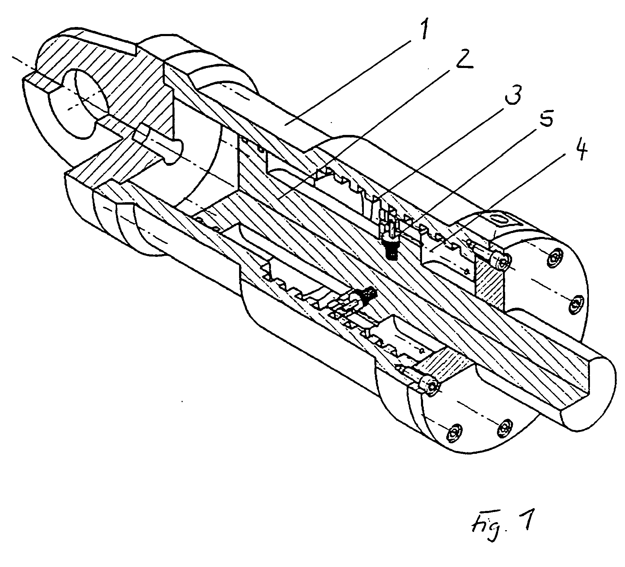

In Fig. 1 ist ein Hydraulikzylinder 1 im Viertelschnitt dargestellt, welcher hier an einer Zylinder- bzw. Kolbenstange 2 einen zweiten Kolben 4 aufweist. Der Kolben 4 dient zur Aufnahme von Mitteln 5 gegen das unerwünschte Verfahren des Zylinders 1 bzw. der Zylinderstange 2. Die hier als Sperrklinken ausgeführten Mittel 5 bilden wenigstens eine umfangsseitig im Kolben 4 eingebundene Ringanordnung. Dabei sind wenigstens zwei, vorzugsweise acht, Sperrklinken 5 vorgesehen. Im Zylinder sind Nuten 3 mit definierten Abständen voneinander vorzugsweise eingedreht. In diese Nut 3 greifen die Sperrklinken 5 des wenigstens einen Ringes, wie in der Figur dargestellt.

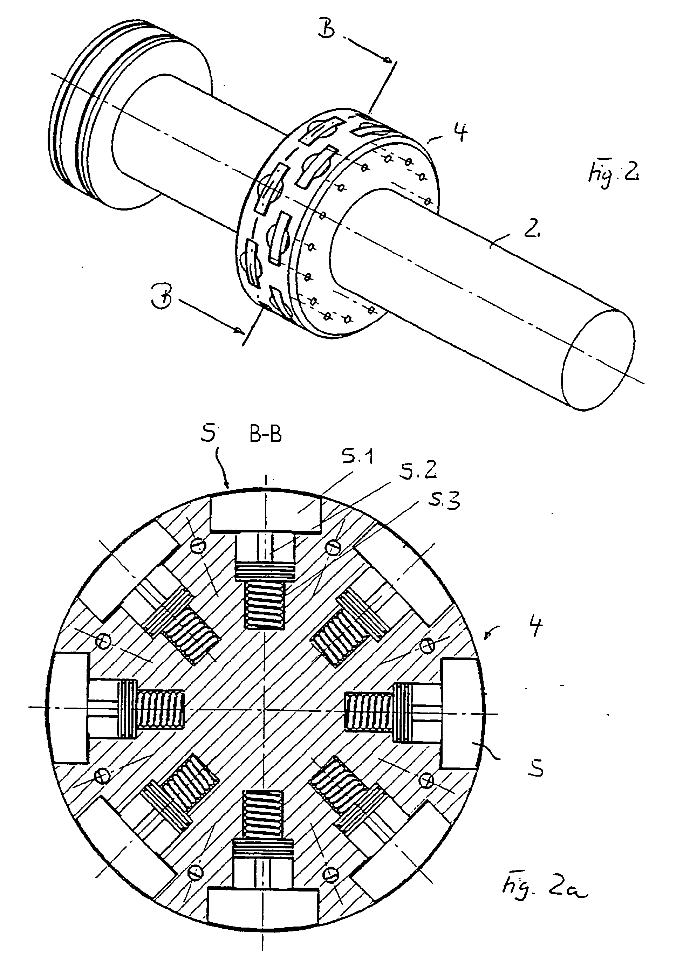

Fig. 2 zeigt die Kolbenstange 2 mit dem zweiten Kolben 4 und den darin befindlichen Sperrklinken 5 in einer isometrischen Darstellung. Die Sperrklinken 5 sind hier, wie auch in Fig. 2a erkennbar, eingefahren. Die Sperrklinken 5 bestehen im Wesentlichen aus einem Stempel 5.1, der auf einem Halter 5.2 aufgeklipst oder dergleichen werden kann, sowie Federn 5.3.

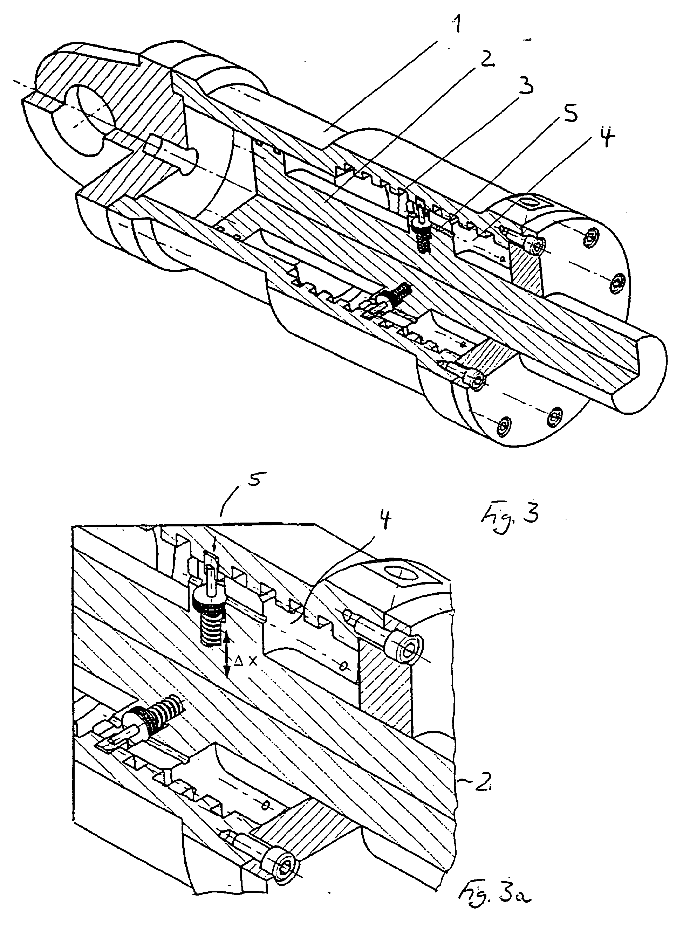

Fig. 3 und Fig. 3a zeigen den Hydraulikzylinder 1 mit im Hydraulikzylinder 1 aus dem Koben 4 um den Weg Δ X ausgefahrenen Sperrklinken 5.

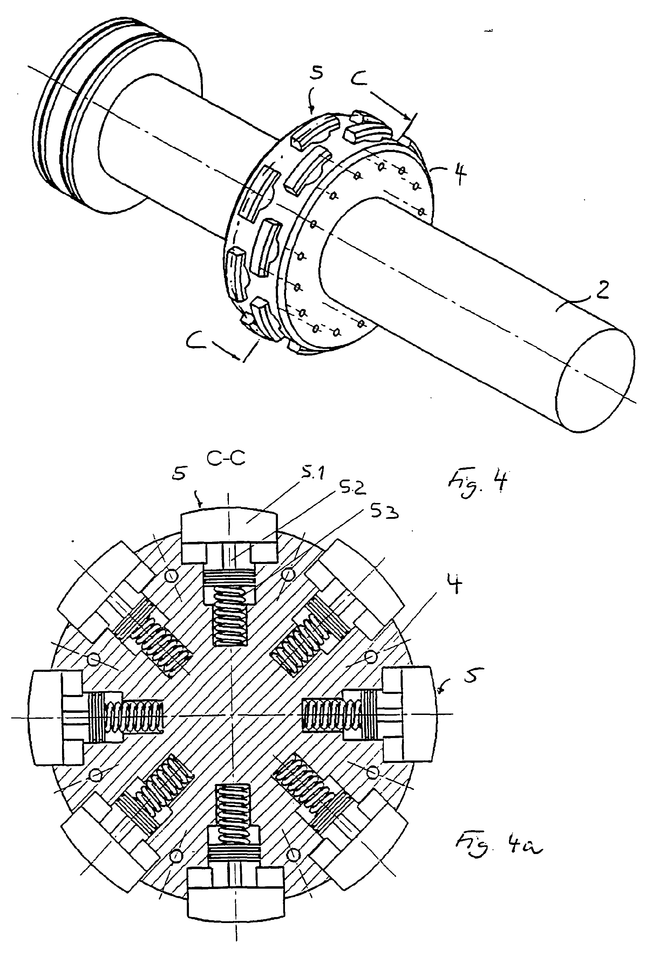

Die Darstellung der aus dem Kolben 4 ausgefahrenen Sperrklinken 5 spiegelt sich in den Fig. 4 und 4a wieder.

### Die Funktionsweise ist wie folgt:

Im gesamten Kolbenstangenraum befinde sich Hydrauliköl, welches durch Bohrungen (nicht näher dargestellt) in den Kolben 4 strömen kann. In diesem Raum wird ein Druck aufgebaut, durch den sichergestellt ist, dass Federn 5.3 der Sperrklinken 5 durch Stempel 5.1 in ihre Nulllage gebracht werden und ein Freigang der Sperrklinken 5 sichergestellt ist . Bei einem Druckverlust im Kolben 4 expandieren die Federn 5.3 und schieben die Sperrklinken 5 über die Stempel 5.1 beim Verfahren der Zylinderstange 2 in die nächst mögliche Nut 3 des Zylinders 1. Vor dem erneuten Verfahren der Zylinderstange 2 werden die Sperrklinken 5 durch einen entsprechenden hydraulischen Druck wieder eingefahren und der Hydraulikzylinder 1 kann wieder beliebig verfahren werden.

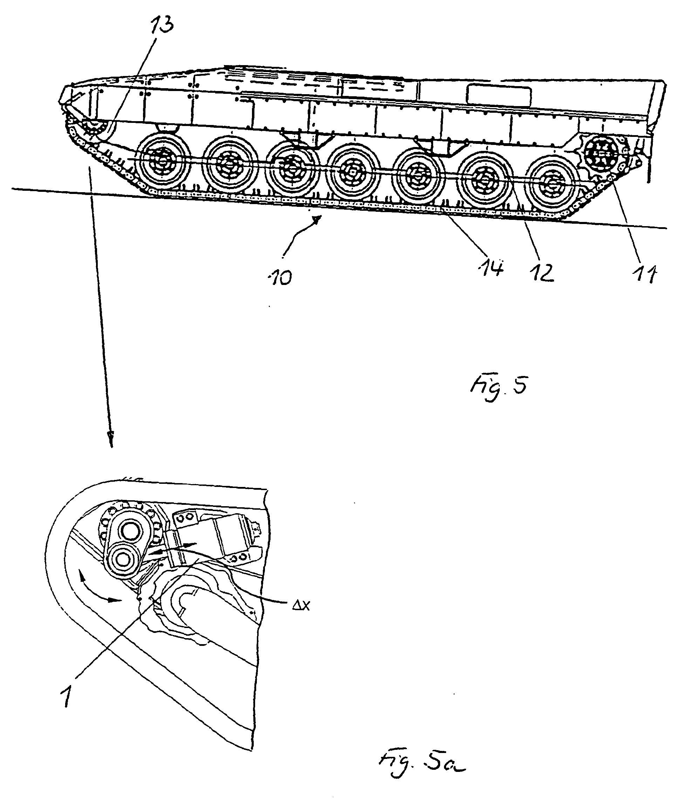

Ein Anwendungsbeispiel ist in Fig. 5 und näher in Fig. 5a aufgezeigt. Ein hier dargestelltes Laufwerk 10 (einseitige Betrachtung) besteht aus einem Antriebsrad 11, Laufrollen 12, einer Umlenkrolle 13, einer Gleiskette 14 sowie nicht näher dargestellten Tragarmen. Die Gleiskette 14 wird über die Umlenkrolle 13 gespannt. Durch den Hydraulikzylinder 1 wird die Z-Achse, an der die Umlenkrolle 13 befestigt ist, nach vorne bzw. nach hinten verfahren, um die Gleiskette zu spannen bzw. zu entspannen. Bei einem Energieausfall oder dergleichen wirkt die vorab beschriebene mechanische Verfahrabsicherung des Hydraulikzylinders 1 mittels Sperrklinken 5.

## Patentansprüche

1. Hydraulikzylinder (1), aufweisend wenigstens eine Zylinderstange (2), wobei
- im Hydraulikzylinder (1) Nuten (3) mit definierten Abständen vorgesehen sind,
- an der Zylinderstange (2) ein weiterer Kolben (4) eingebunden ist, welcher zur Aufnahme von Mitteln (5) gegen ungewolltes Verfahren der Zylinderstange (2) dient,
- die Mittel (5) umfangsseitig verteilt einen oder mehrere Ringe am /im Kolben (4) bilden, **dadurch gekennzeichnet, dass**
- die Mittel (5) bei einem Druckverlust eines im Raum der Zylinderstange (2) enthaltenen Hydrauliköls mittels Federn (5.3) in eine nächst mögliche Nut (3) im Hydraulikzylinder (1) verstellt werden.

2. Hydraulikzylinder nach Anspruch 1, **dadurch gekennzeichnet, dass** die Mittel (5) Sperrklinken sind.

3. Hydraulikzylinder nach Anspruch 1 oder 2, **dadurch gekennzeichnet, dass** die Sperrklinken (5) im Wesentlichen aus einem Stempel (5.1), einem Halter (5.2) für den Stempel (5.1) sowie Federn (5.3) besteht.

4. Hydraulikzylinder nach Anspruch 3, **dadurch gekennzeichnet, dass** wenigstens zwei, vorzugsweise acht Stempel (5) umfangsseitig verteilt eine Ringanordnung am / im Kolben (4) bilden.

5. Laufwerk (10), bestehend aus wenigstens einem Antriebsrad (11), Laufrollen (12), einer Umlenkrolle (13) sowie einer Gleiskette (14) mit wenigstens einem Hydraulikzylinder (1) nach einem der Ansprüche 1 bis 4.

## Claims

1. Hydraulic cylinder (1), having at least one cylinder rod (2), wherein
- grooves (3) are provided at defined intervals in the hydraulic cylinder (1),
- a further piston (4) is connected to the cylinder rod (2), which piston (4) serves to hold means (5) for preventing undesired movement of the cylinder rod (2),
- the means (5), distributed at the periphery, form one or more rings on/in the piston (4),
**characterized in that**,
- in the event of a pressure loss of a hydraulic oil contained in the region of the cylinder rod (2), the means (5) are adjusted by means of springs (5.3) into the closest possible groove (3) in the hydraulic cylinder (1).

2. Hydraulic cylinder according to Claim 1, **characterized in that** the means (5) are pawls.

3. Hydraulic cylinder according to Claim 1 or 2, **characterized in that** the pawls (5) are composed substantially of a plunger (5.1), a retainer (5.2) for the plunger (5.1), and springs (5.3).

4. Hydraulic cylinder according to Claim 3, **characterized in that** at least two, preferably eight plungers (5), distributed at the periphery, form a ring arrangement on/in the piston (4).

5. Running gear (10), composed of at least one drive wheel (11), track rollers (12), a deflecting roller (13) and a crawler chain (14), having at least one hydraulic cylinder (1) according to one of Claims 1 to 4.

## Revendications

1. Cylindre hydraulique (1), présentant au moins une tige de cylindre (2),
- des rainures (3) étant prévues à intervalles définis dans le cylindre hydraulique (1),
- un piston supplémentaire (4) étant incorporé sur la tige de cylindre (2) et servant à recevoir des moyens (5) pour empêcher un déplacement indésirable de la tige de cylindre (2),
- les moyens (5) étant répartis sur la périphérie et formant un ou plusieurs segments sur / dans le piston (4),
**caractérisé en ce que**
- les moyens (5) sont déplacés dans le cylindre hydraulique (1) au moyen de ressorts (5.3) dans la rainure (3) la plus proche dans le cas d'une perte de pression d'huile hydraulique contenue dans la chambre de la tige de cylindre (2).

2. Cylindre hydraulique selon la revendication 1, **caractérisé en ce que** les moyens (5) sont des cliquets d'arrêt.

3. Cylindre hydraulique selon la revendication 1 ou 2, **caractérisé en ce que** les cliquets d'arrêt (5) se composent essentiellement d'un poinçon (5.1), d'un support (5.2) pour le poinçon (5.1) ainsi que de ressorts (5.3).

4. Cylindre hydraulique selon la revendication 3, **caractérisé en ce qu'**au moins deux, de préférence huit poinçons (5) sont répartis sur la périphérie et forment un agencement annulaire sur / dans le piston (4).

5. Chemin de roulement (10), constitué d'au moins une roue d'entraînement (11), de galets de roulement (12), d'une poulie de renvoi (13) ainsi que d'une chenille (14) avec au moins un cylindre hydraulique (1) selon l'une quelconque des revendications 1 à 4.
